(19) Europäisches Patentamt
European Patent Office
Office européen des brevets

(11) **EP 3 962 144 B1**

(12) **EUROPEAN PATENT SPECIFICATION**

(45) Date of publication and mention
of the grant of the patent:
**25.06.2025 Bulletin 2025/26**

(21) Application number: **19926598.4**

(22) Date of filing: **24.12.2019**

(51) International Patent Classification (IPC):
*H04W 36/00* (2009.01)    *H04W 36/30* (2009.01)
*H04W 16/28* (2009.01)    *H04W 16/32* (2009.01)
*H04B 17/309* (2015.01)    *H04B 7/024* (2017.01)
*H04B 7/026* (2017.01)    *H04B 7/0413* (2017.01)
*H04B 7/06* (2006.01)    *H04B 7/08* (2006.01)
*H04B 17/364* (2015.01)    *H04B 17/382* (2015.01)
*H04L 25/02* (2006.01)    *H04L 5/00* (2006.01)

(52) Cooperative Patent Classification (CPC):
**H04L 25/0222; H04B 7/024; H04B 7/026;**
**H04B 7/0413; H04B 17/364; H04B 17/382;**
**H04W 36/00692;** H04L 5/0048

(86) International application number:
**PCT/JP2019/050475**

(87) International publication number:
**WO 2020/217588 (29.10.2020 Gazette 2020/44)**

(54) **COMMUNICATION CONTROL DEVICE AND COMMUNICATION CONTROL METHOD**

KOMMUNIKATIONSSTEUERUNGSVORRICHTUNG UND
KOMMUNIKATIONSSTEUERUNGSVERFAHREN

DISPOSITIF DE COMMANDE DE COMMUNICATION ET PROCÉDÉ DE COMMANDE DE
COMMUNICATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **26.04.2019 JP 2019085364**

(43) Date of publication of application:
**02.03.2022 Bulletin 2022/09**

(73) Proprietor: **NTT DOCOMO, INC.**
**Chiyoda-Ku**
**Tokyo 100-6150 (JP)**

(72) Inventors:
• **TAKAHASHI, Yuuta**
**Tokyo 100-6150 (JP)**

• **SUYAMA, Satoshi**
**Tokyo 100-6150 (JP)**
• **OKUYAMA, Tatsuki**
**Tokyo 100-6150 (JP)**
• **OKUMURA, Yukihiko**
**Tokyo 100-6150 (JP)**

(74) Representative: **Hoffmann Eitle**
**Patent- und Rechtsanwälte PartmbB**
**Arabellastraße 30**
**81925 München (DE)**

(56) References cited:
WO-A1-2018/013024    JP-A- 2004 363 979
JP-A- 2009 100 338    JP-A- 2016 220 046
US-A1- 2018 138 963    US-A1- 2018 138 963

## Description

### Technical Field

The present disclosure relates to a communication control apparatus and a communication control method.

### Background Art

Recently, in order to cope with explosively increasing mobile communication traffic, radio communication techniques using a high frequency band of several GHz to tens of GHz within which a broad band is easily used have attracted attention. As the radio communication techniques using a high frequency band, for example, a high-frequency-band small cell and a Massive MIMO antenna have been proposed. Note that MIMO is an abbreviation of "Multiple Input Multiple Output."

### Citation List

### Patent Literature

PTL 1
Japanese Patent Application Laid-Open No. 2008-42855

### Non-Patent Literature

NPL 1
Y. Kang, H. Go, M. Shin and W. Hur, "Support Vector Machine -Based Wireless Channel Classification for Adaptive AFC in LTE Downlink," 2017 IEEE 85th Vehicular Technology Conference (VTC Spring), 2017.

### Summary of Invention

### Technical Problem

However, in a radio environment of a high frequency band, there is scope for further study on a radio communication control for reducing a decrease in communication performance caused by movement of a terminal (for example, a mobile station).

One object of an aspect of the present disclosure is to reduce the decrease in communication performance caused by movement of the terminal.

### Solution to Problem

The present invention is defined in the independent claims. Further preferred embodiments are defined in the dependent claims. Further examples are provided for facilitating the understanding of the invention.

A communication control apparatus according to an example is configured to include: a control section that selects at least one cell from among a plurality of cells based on information on a Doppler shift estimated based on an uplink reference signal in each of the plurality of cells; and a transmission section that transmits a control signal to the at least one cell selected, the control signal being for controlling radio connection with a terminal.

A communication control method according to an example is configured to include: selecting at least one cell from among a plurality of cells based on information on a Doppler shift estimated based on an uplink reference signal in each of the plurality of cells; and transmitting a control signal to the at least one cell selected, the control signal being for controlling radio connection with a terminal.

### Advantageous Effects of Invention

According to the present disclosure, it is possible to reduce a decrease in communication performance caused by movement of a terminal.

### Brief Description of Drawings

FIG. 1 illustrates an example of a radio communication system;
FIG. 2A is an explanatory view illustrating an example of beamforming in a low frequency band;
FIG. 2B is an explanatory view illustrating an example of beamforming in a high frequency band;
FIG. 3 is an explanatory view illustrating an example of a radio communication environment including a mobile station that is an example of a terminal;
FIG. 4 illustrates an example of configurations of a base station and a core apparatus according to the invention
FIG. 5A is a flowchart illustrating an example of operation of the base station according to the present disclosure;
FIG. 5B is a flowchart illustrating an example of operation of the core apparatus according to the present disclosure;
FIG. 5C is a flowchart illustrating an example of operation of a selected base station according to the present disclosure;
FIG. 6 is an explanatory view illustrating an example of a radio communication system according to Embodiment 1;
FIG. 7 illustrates an example of determination of a priority;
FIG. 8 is an explanatory view illustrating an example of a radio communication system according to Modification 1;
FIG. 9 is an explanatory view illustrating an example of a radio communication system according to Modification 2;
FIG. 10 is an explanatory view illustrating an example of a radio communication system according to Embodiment 2;

FIG. 11 is an explanatory view illustrating an example of a radio communication system according to Modification 3;

FIG. 12 is an explanatory view illustrating an example of a radio communication system according to Embodiment 3;

FIG. 13 illustrates an example of determination of a priority; and

FIG. 14 illustrates an exemplary hardware configuration of the base station, the core apparatus, and the terminal.

Description of Embodiments

<High-Frequency-Band Small Cell>

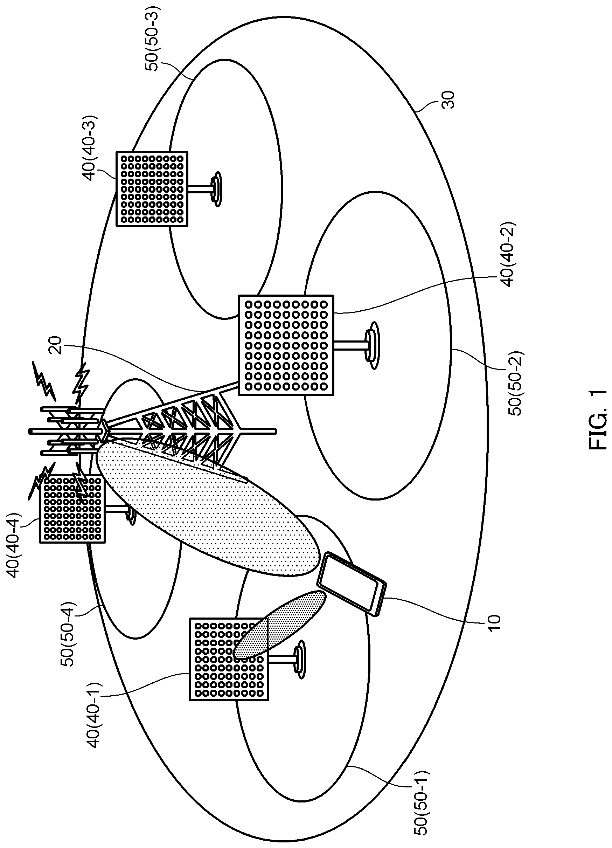

FIG. 1 illustrates an example of a radio communication system. As illustrated in FIG. 1, the radio communication system may include one or more first base stations 20 and a plurality of second base stations 40. As one non-limiting example, FIG. 1 illustrates four base stations 40-1, 40-2, 40-3, and 40-4.

Base station 20 exemplarily forms cell 30. Base stations 40 (40-1, 40-2, 40-3, and 40-4) form cells 50 (50-1, 50-2, 50-3, and 50-4), respectively. Cells 50 may be encompassed within cell 30 or may partially overlap with cell 30. Cell 30 may be, for example, a macro cell, and each of cells 50 may be, for example, a cell (e.g., a small cell or a semi-macro cell) having a smaller coverage than the macro cell.

Base station 20 may be, for example, an aggregate node (central unit (CU)) and some or all of base stations 40 may be, for example, distributed nodes (distributed units (DUs)) connected to CU 20 by a fronthaul (FH) interface. For example, a common public radio interface (CPRI) may be applied as the FH interface. The CU may be referred to as "centralized baseband unit (CBBU)" or "BBU." In the following description, a base station corresponding to the CU may be referred to as a "macro base station," "macro cell," or "core apparatus" for convenience. On the other hand, a base station corresponding to the DU may be referred to as a "small base station," "small cell," "base station cell," or "radio apparatus" for convenience.

Mobile station 10 connects with (accesses) at least one of macro base station 20 and small base stations 40. In areas where macro cell 30 and small cells 50 overlap, mobile station 10 is capable of connecting with both macro base station 20 and small base stations 40. Cells 40 may be assigned a high frequency band (e.g., a frequency band of several GHz to tens of GHz that is a frequency band used for 5th Generation New Radio (5G NR)) higher than the frequency band in cell 30. Cell 30 may be assigned a low frequency band (e.g., a frequency band of several hundred MHz to several GHz that is a frequency band used for Long Term Evolution (LTE)).

In the high frequency band of several GHz to tens of GHz, it is easier to secure a radio resource (hereinafter, referred to simply as "resource") of a broader bandwidth as compared with the low frequency band, and thus, high-speed and large-capacity communication can be realized. On the other hand, a radio wave in the high frequency band has higher straightness and has a shorter wavelength than a radio wave in the low frequency band. Accordingly, the radio wave in the high frequency band is likely to suffer a greater radio wave propagation loss, and the communication distance thus tends to be shorter. Therefore, the coverages of cells 50 that can be formed by base stations 40 tend to be smaller than the coverage of macro cell 30 formed by base station 20 as illustrated in FIG. 1. Note that, a cell utilizing a high frequency band (e.g., small cell or semi-macro cell) may be referred to as "high-frequency-band cell" or "high-frequency-band small cell."

<Massive MIMO Antenna>

Massive MIMO transmission using a massive MIMO antenna including, for example, 100 or more antenna elements may be applied to radio signal transmission in high-frequency-band cells 40. The massive MIMO antenna includes a large number of antenna elements, so as to be capable of facilitating spatial multiplexing of transmission and reception streams to achieve high-speed and large-capacity radio communication. The massive MIMO antenna also makes it possible to realize enhanced beamforming (BF) as follows.

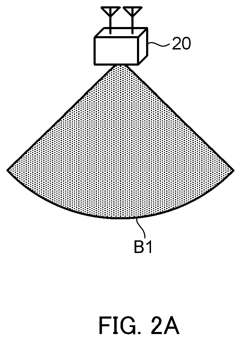

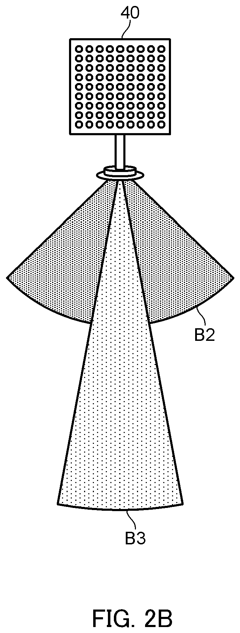

FIG. 2A is an explanatory view illustrating an example of beamforming in a low frequency band. FIG. 2B is an explanatory view illustrating an example of beamforming in a high frequency band.

Beam B2 in the high frequency band illustrated in FIG. 2B suffers a greater radio wave propagation loss than beam B1 in the low frequency band illustrated in FIG. 2A. Thus, the reachable distance of beam B2 in the high frequency band is likely to be shorter than beam B1 in the low frequency band having the same full width at half maximum illustrated in FIG. 2A. In order to extend the reachable distance of beam B2 in the high frequency band, (sharper) beam B3 having a narrower full width at half maximum is generated, for example, by beamforming using the massive MIMO antenna. The beamforming allows an increase in beam gain (which may also be referred to as "beamforming gain," hereinafter), to extend the reachable distance of beam B3. In other words, a decrease in reception strength due to the increase in the propagation loss of the radio wave in the high frequency band can be covered by the beamforming gain produced using the massive MIMO antenna. Further, beamforming using a large number of MIMO antenna elements allows the directivity of a beam to be directed in a particular direction, so as to allow, for example, easier reduction of interference with other cells, thereby improving resource utilization efficiency.

Further, the size of each of the MIMO antenna elements can be small because the size is proportional to the wavelength of the radio wave to be transmitted and received. The shorter the wavelength of the radio wave to be transmitted and received (i.e., the higher the frequency), the smaller the size of the antenna element can be. Therefore, the massive MIMO antenna in the high frequency band as a whole can be miniaturized relatively easily despite including a large number of antenna elements.

<High-Speed Movement Environment in High-Frequency Band>

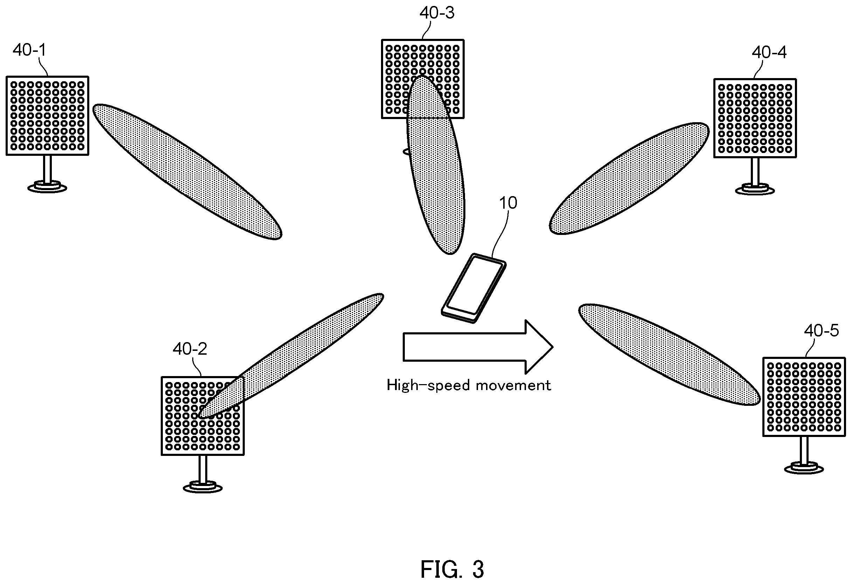

FIG. 3 is an explanatory view illustrating an example of the radio communication environment including mobile station 10 that is an example of the terminal. In FIG. 3, mobile station 10 moves among base station cells 40-1 to 40-5. The movement of mobile station 10 may be exemplarily assumed to be high-speed movement of a vehicle in transportation, such as a car, a railway, or the like.

As described above with reference to FIG. 1, when base station cells 40-1 to 40-5 are formed from high frequency band cells, more cells 40 are installed than base station 30 in order to increase the coverage by the high frequency band cells. Therefore, it is assumed that base station cell 40 to which mobile station 10 is connected is frequently switched as mobile station 10 moves.

In addition, when mobile station 10 is moving at high speed, the radio communication in the high frequency band is more affected by a Doppler shift than the radio communication in the low frequency band.

In the following, an embodiment relating to a radio communication control capable of reducing an effect of the Doppler shift in the high frequency band will be described with reference to the drawings.

<One Example of Configuration according to Present Disclosure>

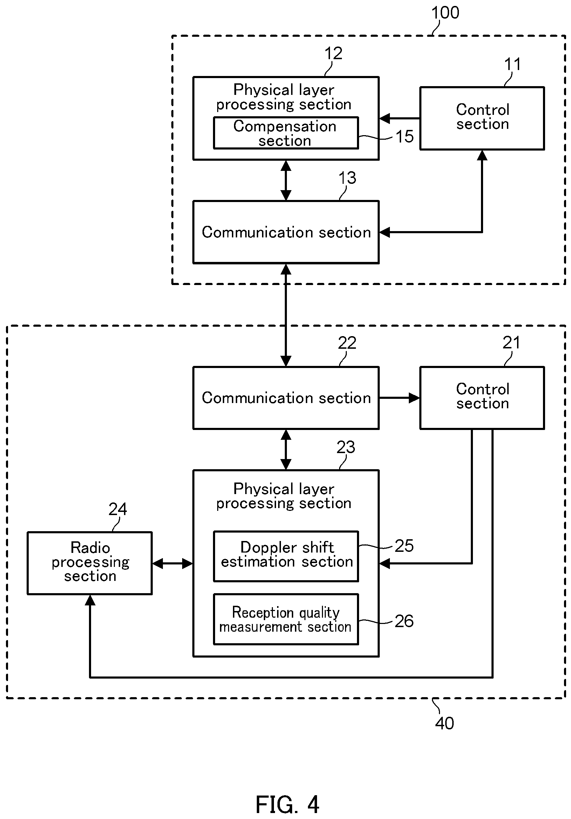

FIG. 4 illustrates an example of a configuration of base station 40 and core apparatus (communication control apparatus) 100 according to the present disclosure. For simplicity, FIG. 4 focuses on one base station 40.

Base station (base station cell or cell) 40 includes, for example, control section 21, communication section 22, physical layer processing section 23, and radio processing section 24.

For example, in accordance with a downlink (DL) transmission instruction signal inputted from communication section 22, control section (control circuit) 21 instructs physical layer processing section 23 to perform physical layer processing on a DL signal to mobile station 10, and also instructs radio processing section 24 to perform DL radio transmission. Here, the DL transmission instruction signal is a signal for instructing base station 40 to transmit the DL signal, and is one example of a control signal.

Communication section 22 includes, for example, a transmission circuit and a reception circuit, and transmits and receives a signal to and from core apparatus 100. For example, an FH interface may be applied as communication section 22. Communication section 22 exemplarily receives Doppler information from Doppler shift estimation section 25 and transmits the Doppler information to core apparatus 100. In addition, communication section 22 receives, for example, reception quality information from reception quality measurement section 26 and transmits the reception quality information to core apparatus 100. Communication section 22, for example, transmits, to core apparatus 100, a UL signal inputted from physical layer processing section 23. Further, communication section 22 receives the DL signal from core apparatus 100 and outputs the DL signal to physical layer processing section 23, for example.

Physical layer processing section 23 exemplarily includes a signal processing circuit. For example, in accordance with an instruction from control section 21, physical layer processing section 23 performs physical layer processing on the DL signal inputted from communication section 22. Physical layer processing section 23 outputs the processed DL signal to radio processing section 24. Further, physical layer processing section 23 performs physical layer processing on the UL signal inputted from radio processing section 24, for example. Physical layer processing section 23 outputs the processed UL signal to communication section 22.

Physical layer processing section 23 may include, for example, Doppler shift estimation section 25 and reception quality measurement section 26.

Doppler shift estimation section 25 estimates a Doppler shift, for example, based on the UL signal inputted from physical layer processing section 23. The information indicating the estimated Doppler shift (Doppler information) is outputted to, for example, communication section 22.

Reception quality measurement section 26 measures, for example, the reception quality of the UL signal inputted from physical layer processing section 23. Information indicating the measured reception quality is outputted to, for example, communication section 22. One non-limiting example of the reception quality information is a reception strength or a Signal-to-Noise Ratio (SNR). In the present disclosure, the reception strength is taken as an example of the reception quality for ease of description. In this case, the reception quality information is reception strength information indicating the reception strength of the UL signal.

For example, radio processing section 24 performs radio processing on a radio signal received from mobile station 10 and outputs the processed UL signal to physical layer processing section 23. The radio processing on the UL signal may include, for example, analog beamforming (ABF) and Analog to Digital (A/D) conversion. Further, for example, in accordance with an instruction from control section 21, radio processing section 24 performs radio processing on the DL signal inputted from physical layer processing section 23, and transmits the processed signal to mobile station 10. The radio processing on the DL signal may include, for example, Digital to Analog (D/A) conversion, and ABF.

Core apparatus 100 includes, for example, control section 11, physical layer processing section 12, and communication section 13.

Based on, for example, the Doppler information and the reception strength information inputted from communication section 22, control section (control circuit) 11 instructs physical layer processing section 12 to perform physical layer processing on the DL signal. The physical layer processing on the DL signal may include, for example, Doppler shift compensation and frequency offset compensation. Further, control section 11 outputs the control signal (e.g., DL transmission instruction signal) to communication section 13, for example, based on the Doppler information and the reception strength information.

Physical layer processing section 12 includes, for example, a signal processing circuit. In accordance with an instruction of control section 11, physical layer processing section 12 performs physical layer processing on the UL signal inputted from communication section 13. Further, physical layer processing section 12 performs physical layer processing on the DL signal, for example, in accordance with an instruction of control section 11. The processed DL signal is outputted to, for example, communication section 13.

Physical layer processing section 12 includes, for example, compensation section 15. Compensation section 15 applies the Doppler shift compensation, or the Doppler shift compensation and frequency offset compensation to the DL signal, for example, in response to an instruction of control section 11.

Communication section 13 includes, for example, a transmission circuit and a reception circuit, and transmits and receives signals to and from base stations 40. For example, an FH interface may be applied as communication section 13. For example, communication section 22 receives the Doppler information and reception strength information from base station 40 and outputs the Doppler information and reception strength information to control section 11. Further, communication section 13 receives the UL signal from base station 40 and outputs the UL signal to physical layer processing section 12. Further, communication section 13 receives the DL signal from physical layer processing section 12 and transmits the DL signal to base station 40. Further, communication section 13 receives the DL transmission instruction signal from control section 11 and transmits the DL transmission instruction signal to base station 40.

<One Example of Operation according to Present Disclosure>

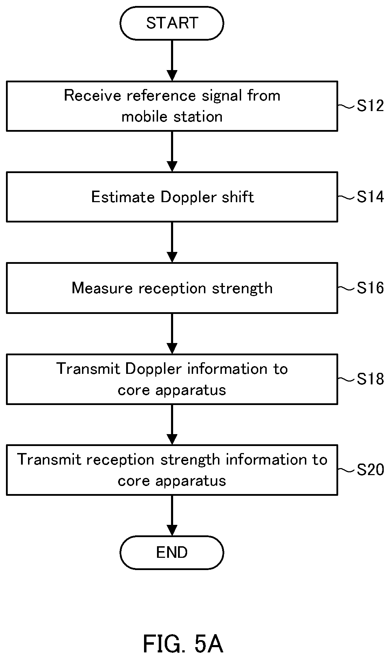

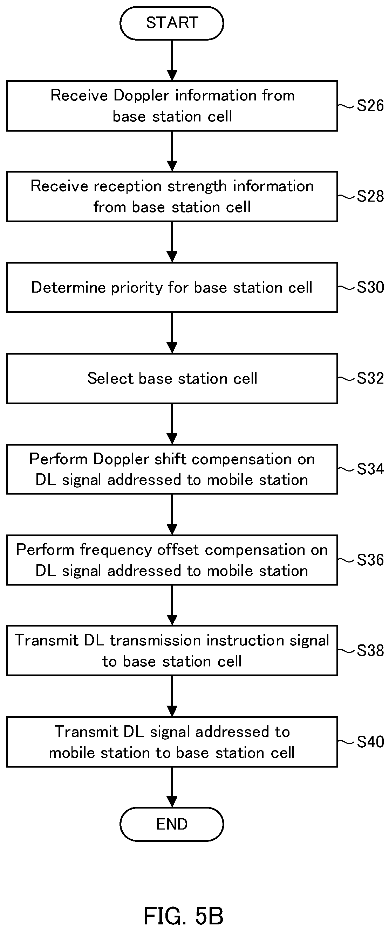

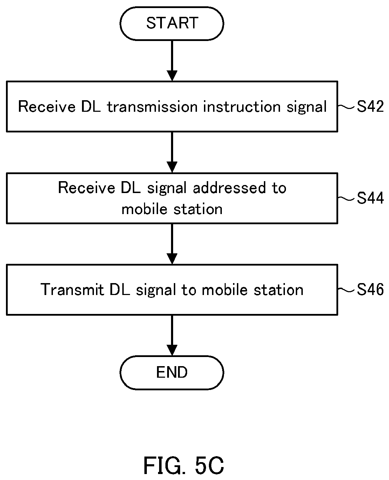

FIG. 5A is a flowchart illustrating an example of operation of base station 40 according to the present disclosure. FIG. 5B is a flowchart illustrating an example of operation of core apparatus 100 according to the present disclosure. FIG. 5C is a flowchart illustrating an example of operation of selected base station 40 according to the present disclosure. Note that, depending on exemplary embodiments according to the present disclosure, at least one step in the flowcharts illustrated in FIGS. 5A to 5C may be omitted. Further, the order of steps included in the flowcharts illustrated in FIGS. 5A to 5C is merely an exemplary order for the operations by core apparatus 100 or base station 40. The steps included in a flowchart may be performed in parallel with or concurrently with other steps, or the order of execution may be interchanged with other steps.

Reference is made to FIG. 5A. In step S12, radio processing section 24 of each base station 40 receives a UL radio signal including a reference signal from mobile station 10. The UL reference signal is used for estimation of a Doppler shift and measurement of at least one reception strength. In one example, the reference signal is a channel quality measurement reference signal (sounding reference signal (SRS)). The SRS is used for estimation of a channel transmission path for an adaptive radio link control (e.g., for determining precoding weight, and/or determining a modulation scheme). In another example, the reference signal may be a demodulation reference signal (DMRS). Further, in still another example, the reference signal may be a known signal transmitted by mobile station 10 upon request of base station 20 or base station 40. The known signal is a signal known between base station 40 and mobile station 10.

In step S14, Doppler shift estimation section 25 of each base station 40 estimates the Doppler shift of the radio signal based on the reference signal received from mobile station 10. In one example, Doppler shift estimation section 25 estimates the Doppler shift based on correlations between orthogonal frequency division multiplexing (OFDM) symbols contained in the reference signal. In another example, Doppler shift estimation section 25 estimates the Doppler shift based on correlations between cyclic prefixes (CPs) of OFDM symbols contained in the radio signal. Doppler shift estimation section 25 may estimate the Doppler shift based on a plurality of types of reference signals.

In step S16, reception quality measurement section 26 of each base station cell 40 measures the reception strength of the radio signal based on the reference signal received from mobile station 10. In one example, reception quality measurement section 26 measures the amplitude of the reference signal to measure the reception strength. Reception quality measurement section 26 may measure the reception strength based on a plurality of types of reference signals.

In step S18, communication section 22 of each base station cell 40 transmits, to core apparatus 100, the Doppler information indicating the Doppler shift estimated by Doppler shift estimation section 25.

In step S20, communication section 22 of each base station cell 40 transmits, to core apparatus 100, the reception strength information indicating the reception strength measured by reception quality measurement section 26.

Next, reference is made to FIG. 5B. In step S26, communication section 13 of core apparatus 100 receives the Doppler information from each base station cell 40.

In step S28, communication section 13 of core apparatus 100 receives the reception strength information from each base station cell 40.

In step S30, control section 11 of core apparatus 100 determines priorities for base station cells 40. In one example, control section 11 determines the priorities for base station cells 40 based on the Doppler information. In another example, control section 11 determines the priorities for base station cells 40 based on the Doppler information and the reception strength information. Examples of the priority determination will be described later in Embodiments 1 to 3 and Modifications 1 to 3.

In step S32, control section 11 of core apparatus 100 selects base station cell 40 based on the determined priorities. In one example, control section 11 selects base station cell 40 having the highest priority. In another example, control section 11 selects a predetermined number of base station cells 40 in descending order of priority. Base station cell 40 selected in step S32 is a base station cell for which it is expected that the radio signal transmitted and received to and from mobile station 10 is less affected by the Doppler shift than radio signals of other base station cells 40.

In step S34, compensation section 15 of core apparatus 100 compensates, based on the Doppler information, for the Doppler shift with respect to the DL signal addressed to mobile station 10. An example of the compensation for the Doppler shift will be described later in Embodiments 2 and 3 and Modification 3.

In step S36, compensation section 15 of core apparatus 100 applies a frequency offset to the DL signal addressed to mobile station 10 based on the Doppler information. An example of the application of the frequency offset will be described in below-described Embodiment 3 and Modification 3.

In step S38, control section 11 of core apparatus 100 transmits the DL transmission instruction signal to base station cell 40. In one example, base station cell 40 to which the DL transmission instruction signal is transmitted is base station cell 40 selected in step S32. In another example, base station cell 40 to which the DL transmission instruction signal is transmitted is all base station cells 40.

In step S40, in response to an instruction from control section 11, communication section 13 of core apparatus 100 transmits the DL signal addressed to mobile station 10 to base station cell 40. Base station cell 40 to which the DL signal is transmitted is base station cell 40 to which the DL transmission instruction signal is transmitted.

Reference is made to FIG. 5C. Base station cell 40 determined in step S38 as an addressee to which the DL transmission instruction signal is transmitted performs following steps S42 to S46.

In step S42, base station cell 40 receives the DL transmission instruction signal from core apparatus 100.

In step S44, each base station cell 40 receives, from core apparatus 100, the DL signal addressed to mobile station 10.

In step S46, each base station cell 40 performs connection with mobile station 10 in accordance with a predetermined connection procedure (which may also be referred to as a "connection scheme"), and transmits the DL signal to mobile station 10 after the connection is established.

<Embodiment 1>

Next, Embodiment 1 will be described. In Embodiment 1, a control is performed to lower a priority for connection of mobile station 10 with base station cell 40 where an influence of a Doppler shift is relatively large.

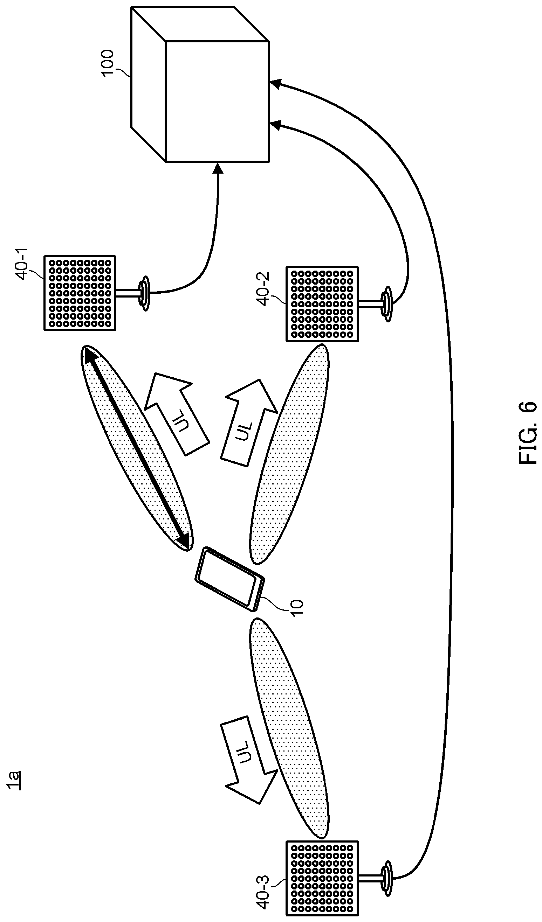

FIG. 6 is an explanatory view illustrating an example of radio communication system 1a according to Embodiment 1. In radio communication system 1a illustrated in FIG. 6, three base station cells 40-1, 40-2, and 40-3 are focused on for the sake of simplicity. Radio communication system 1a includes mobile station 10, base station cells 40-1, 40-2, and 40-3, and core apparatus 100.

Each of base station cells 40-1, 40-2, and 40-3 estimates a Doppler shift and measures a reception strength based on a radio signal received from mobile station 10. As illustrated in FIG. 6, each of base station cells 40-1, 40-2, and 40-3 transmits Doppler information indicating the estimated Doppler shift and reception strength information indicating the measured reception strength to core apparatus 100.

Core apparatus 100 having received the Doppler information and the reception strength information from base station cells 40-1, 40-2, and 40-3 determines priorities for base station cells 40-1, 40-2, and 40-3 based on the Doppler information and the reception strength information.

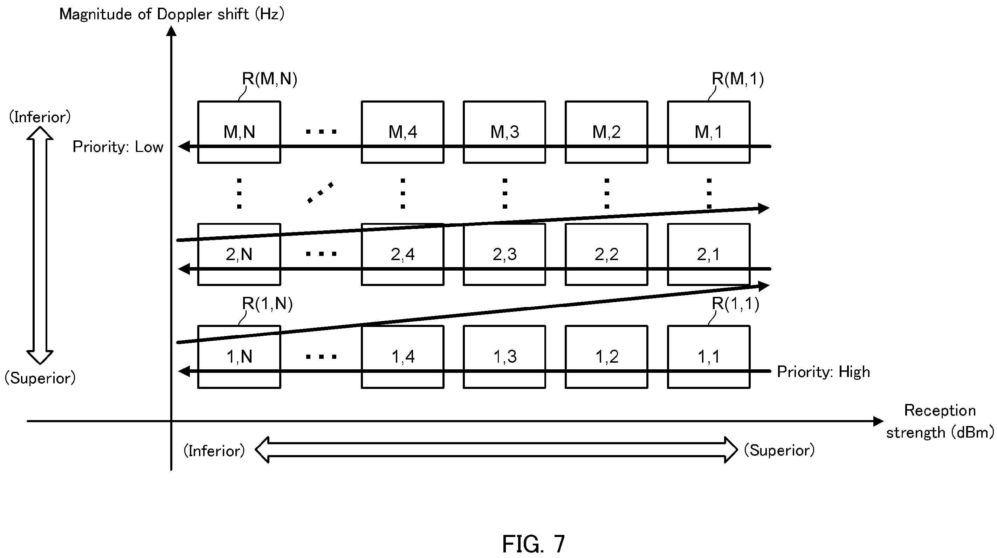

FIG. 7 illustrates an example of the determination of priorities.

In one example, as illustrated in FIG. 7, a rectangular region in a two-dimensional space where the magnitude of the Doppler shift and the reception strength are used as coordinates is divided into a plurality of rectangular regions $\{R(i, j)\}$. Here, index i ($1 \leq i \leq M$) is an index determined according to the magnitude of the Doppler shift, and the smaller the value of index i, the smaller the magnitude of the Doppler shift. In addition, index j $(1 \leq j \leq N)$ is an index determined according to the magnitude of the reception strength, and the smaller the value of index j, the greater the reception strength. The sizes of the horizontal widths and the vertical widths of the plurality of rectangular regions $\{R(i, j)\}$ may be equal to or different from one another, or may also be uniform or not uniform. Further, the sizes may also be configured depending on the environment in which radio signals are received.

For example, the order of "$>_1$" is introduced for a plurality of rectangular regions $\{R(i, j)\}$ as follows:

$$R(i1, j1) >_1 R(i2, j2)$$

(in the case of i1 < i2)

$$R(i, j1) >_1 R(i, j2)$$

(in the case of j1 < j2)

In comparison using the order of "$>_1$," rectangular region $R(i, j)$ of a smaller magnitude of Doppler shift represents a higher priority, and rectangular region $R(i, j)$ of a greater reception strength represents a higher priority. In addition, the magnitude of Doppler shift has a greater effect on the order than the reception strength has.

Priorities are configured for the plurality of rectangular regions $\{R(i, j)\}$ based on the comparison using the order of "$>_1$." When $R(i1, j1) >_1 R(i2, j2)$, the priority configured for $R(i1, j1)$ is higher than the priority configured for $R(i2, j2)$. For example, as illustrated in FIG. 7, among the plurality of rectangular regions $\{R(i, j)\}$, the highest priority is configured for rectangular region $R(1, 1)$ of the smallest magnitude of Doppler shift and the greatest reception strength. In addition, among the plurality of rectangular regions $\{R(i, j)\}$, the lowest priority is configured for rectangular region $R(M, N)$ of the largest magnitude of Doppler shift and the smallest reception strength.

Core apparatus 100 determines, with respect to base station cell 40, the priority configured for rectangular region $R(i, j)$ to which the magnitude of Doppler shift and the reception strength indicated in the Doppler information and the reception strength information received from base station cell 40 belongs. Core apparatus 100 selects base station cell 40 having the highest priority (e.g., base station cell 40-1).

In another example, letting the magnitude of Doppler shift and the magnitude of reception strength of base station cell 40-i as indicated in the Doppler information and the reception strength information be $d(i)$ [Hz] and $r(i)$ [dBm], respectively, a priority is determined for base station cell 40-i based on the following order of "$>_2$:"

Base station cell 40-i $>_2$ Base station cell 40-j (in the case of $C_1 \times d(j) - C_2 \times r(j) > C_1 \times d(i) - C_2 \times r(i)$)

where both $C_1$ [Hz$^{-1}$] and $C_2$ [dBm$^{-1}$] are predetermined positive values. The priority configured for base station cell 40-i is higher than the priority configured for base station cell 40-j when base station cell 40-i $>_2$ base station cell 40-j. With decreasing value of $C_2/C_1$, the effect of the magnitude of Doppler shift on the order increases more than the effect of the reception strength. Core apparatus 100 selects base station cell 40 (e.g., base station cell 40-1) having the highest priority based on the order of "$>_2$."

Next, core apparatus 100 instructs selected base station cell 40-1 to execute the connection procedure with mobile station 10. Upon receiving the instruction, base station cell 40-1 performs the connection procedure with mobile station 10.

According to Embodiment 1, core apparatus 100 preferentially instructs base station cell 40 where an influence of Doppler shift on mobile station 10 is small to execute the connection procedure with mobile station 10. Thus, mobile station 10 can preferentially connect to base station cell 40 where the reception quality is better. Therefore, a decrease in the communication performance caused by the movement of mobile station 10 is reduced.

<Modification 1>

In Embodiment 1 described above, core apparatus 100 selects one base station cell 40-1, and instructs selected base station cell 40-1 to execute the connection procedure with mobile station 10. Next, a modification (Modification 1) of Embodiment 1, in which core apparatus 100 instructs a plurality of base station cells 40 to execute the connection procedure with mobile station 10, will be described. Note that, the description of the configurations the same between Embodiment 1 and the modification is omitted.

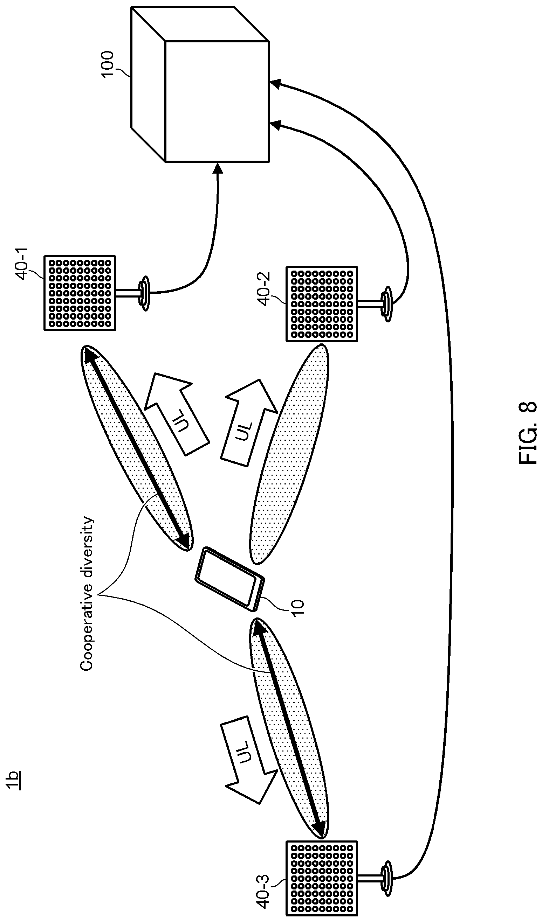

FIG. 8 is an explanatory view illustrating an example of radio communication system 1b according to Modification 1. In radio communication system 1b illustrated in FIG. 8, three base station cells 40-1, 40-2, and 40-3 are focused on for the sake of simplicity. Radio communication system 1b includes mobile station 10, base station cells 40-1, 40-2, and 40-3, and core apparatus 100. Radio communication system 1b includes mobile station 10, base station cells 40-1, 40-2, and 40-3, and core apparatus 100.

Each of base station cells 40-1, 40-2, and 40-3 estimates a Doppler shift and measures a reception strength based on radio signals received from mobile station 10. As illustrated in FIG. 8, base station cells 40-1, 40-2, and 40-3 transmit Doppler information indicating the estimated Doppler shift and reception strength information indicating the measured reception strength to core apparatus 100.

Core apparatus 100 having received the Doppler information and the reception strength information from base station cells 40-1, 40-2, and 40-3 determines priorities for base station cells 40-1, 40-2, and 40-3 based on the Doppler information and the reception strength information. The determination of the priorities may be the same as the determination of the priorities in Embodiment 1.

Next, core apparatus 100 selects a predetermined number of base station cells 40 in descending order of priority. In the example illustrated in FIG. 8, the predetermined number is two, and two base station cells 40-1 and 40-3 are selected. Core apparatus 100 instructs selected base station cells 40-1 and 40-3 to execute the connection procedure with mobile station 10.

In one example, core apparatus 100 estimates the relative speed of mobile station 10 with respect to each of base station cells 40-1, 40-2, and 40-3 based on the Doppler information. When the estimated relative speed is 0, i.e., mobile station 10 is unmoving with respect to all of base station cells 40-1, 40-2, and 40-3, a priority equal between base station cells 40-1, 40-2, and 40-3 is determined. In other words, the priorities of base station cells 40-1, 40-2, and 40-3 are equal or fair. In this case, any of base station cells 40-1, 40-2, and 40-3 having the priority equal between the base stations may be connected to mobile station 10.

According to Modification 1, core apparatus 100 may preferentially instruct the plurality of base station cells 40 where an effect of Doppler shift on mobile station 10 is small to perform the connection procedure, so as to allow cooperative diversity connection with mobile station 10. Therefore, a decrease in the communication performance caused by the movement of mobile station 10 is reduced.

<Modification 2>

In Embodiment 1, mobile station 10 is connected to a plurality of base station cells 40 without using a relay device. Next, a modification (Modification 2) of Embodiment 1, in which mobile station 10 is connected to a plurality of base station cells 40 via a relay device, will be described. Note that, the description of the configurations the same between Embodiment 1 and the modification is omitted.

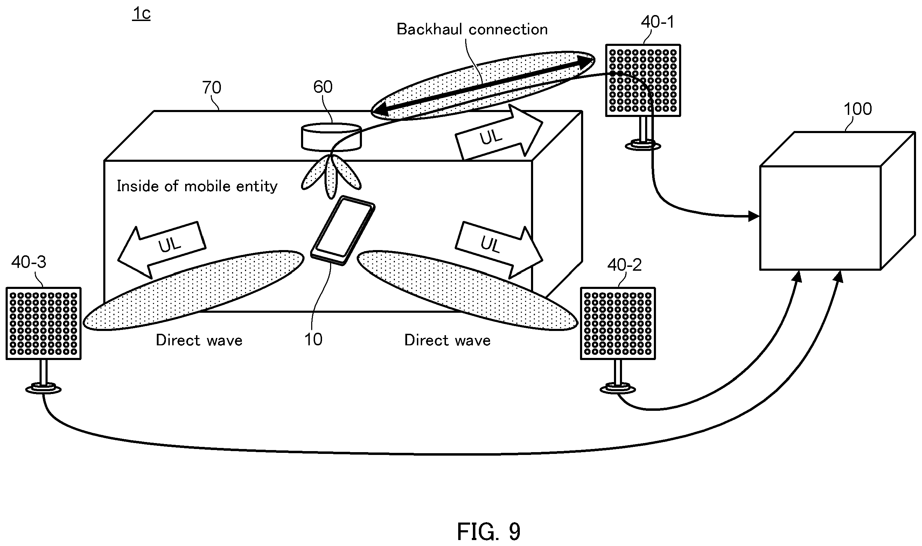

FIG. 9 is an explanatory view illustrating an example of radio communication system 1c according to Modification 2. In radio communication system 1c illustrated in FIG. 9, three base station cells 40-1, 40-2, and 40-3 are focused on for the sake of simplicity. Radio communication system 1c includes mobile station 10, base station cells 40-1, 40-2, and 40-3, core apparatus 100, and relay device 60.

Relay device 60 is installed inside mobile entity 70 moving at high speed, such as, for example, a carriage of an automobile or a train, or an airframe of an aircraft, to relay communications between mobile station 10 and base station cell 40-1.

When relay device 60 and base station cell 40-1 are connected to each other (such connection may be referred to as a "backhaul (BH) connection"), the line capacity between relay device 60 and base station cell 40-1 is relatively large. Thus, in one example, core apparatus 100 determines a high priority for base station cell 40-1 that is backhaul-connected to relay device 60. The determined high priority is, for example, a priority higher than those determined for any other base station cells 40 that are not backhaul-connected. Further, in one example, when there are a plurality of relay devices 60 to be backhaul-connected, core apparatus 100 determines a low priority for base station cell 40 that is not backhaul-connected. The determined lower priority is, for example, a priority lower than the determined priority for all base station cells 40 that are backhaul-connected.

In one example, relay device 60 notifies information indicating a congestion status (congestion information) to core apparatus 100. A broadcast transmission may illustratively be applied as this notification. For example, relay device 60 may include the congestion information in a broadcast signal. Based on the notified congestion information, core apparatus 100 determines whether or not congestion has occurred at relay device 60, and when it is determined that congestion has occurred, core apparatus 100 determines a low priority for base station cell 40 backhaul-connected with relay device 60. The determined low priority is, for example, a priority lower than priorities determined for any other base station cells 40 that are backhaul-connected.

According to Modification 2, core apparatus 100 can preferentially understand the backhaul connection, and it is thus possible to reduce the possibility of frequent switching of cell 40 to which mobile station 10 moving together with mobile entity 70 inside mobile entity 70 is connected. Therefore, a decrease in the communication performance caused by the movement of mobile station 10 is reduced.

<Embodiment 2>

In Embodiment 1 described above, core apparatus 100 selects, based on the Doppler shifts estimated by base station cells 40, base station cell 40 which is to connect with mobile station 10. In Embodiment 2, an example will be described in which core apparatus 100 performs Doppler shift compensation on a DL signal of each base station cell 40.

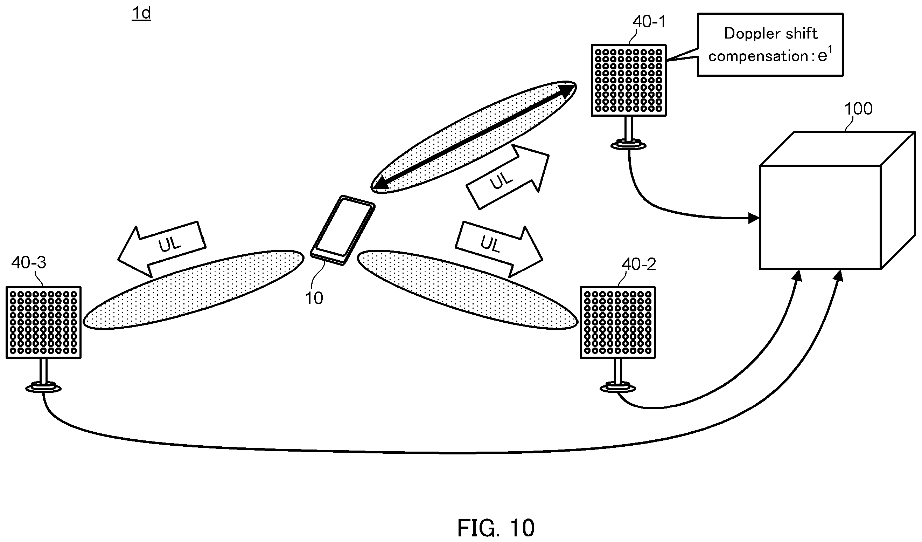

FIG. 10 is an explanatory view illustrating an example of radio communication system 1d according to Embodiment 2. In radio communication system 1d illustrated in FIG. 10, three base station cells 40-1, 40-2, and 40-3 are focused on for the sake of simplicity. Radio communication system 1d includes mobile station 10, base station cells 40-1, 40-2, and 40-3, and core apparatus 100.

Each of base station cells 40-1, 40-2, and 40-3 estimates a Doppler shift and measures a reception strength based on radio signals received from mobile station 10. As illustrated in FIG. 10, base station cells 40-1, 40-2, and 40-3 transmit Doppler information indicating the estimated Doppler shift and reception strength information indicating the measured reception strength to core apparatus 100.

Core apparatus 100 having received the Doppler information and the reception strength information from base station cells 40-1, 40-2, and 40-3 determines priorities for base station cells 40-1, 40-2, and 40-3 based on the Doppler information and the reception strength information. In one example, the highest priority is determined for base station cell 40 having the smallest magnitude of Doppler shift among those base station cells 40 which have reception strengths greater than a predetermined threshold. In another example, the highest priority is determined for base station cell 40 having the highest reception strength among those base station cells 40 which have magnitudes of Doppler shift smaller than a predetermined threshold.

Next, core apparatus 100 selects base station cell 40 (e.g., base station cell 40-1) having the highest priority determined. Core apparatus 100 applies signal processing to a DL signal that is to be transmitted to mobile station 10 via selected base station cell 40-1. The signal processing is, for example, the Doppler shift compensation, or the Doppler shift compensation and frequency offset compensation. The Doppler shift compensation applies, to the DL signal, antiphase rotation that can cancel in-phase rotation dependent on the estimated Doppler shift, for example. The frequency offset compensation applies, to the DL signal, a frequency offset that can cancel the estimated frequency offset.

For example, as illustrated in FIG. 10, core apparatus 100 applies antiphase rotation $e^1$ to the DL signal that is to be transmitted to mobile station 10 via selected base station cell 40-1. Core apparatus 100 transmits, to base station cell 40-1, the DL signal to which the signal processing has been applied.

According to Embodiment 2, even when moving at high speed, mobile station 10 can receive, from base station cell 40 where the effect of Doppler shift is small, the DL signal that is less affected by the Doppler shift. Therefore, a decrease in the communication performance caused by the movement of mobile station 10 is reduced.

<Modification 3>

In Embodiment 2 described above, core apparatus 100 selects one base station cell 40-1 and performs the Doppler shift compensation on the DL signal that is to be transmitted to mobile station 10 via selected base station cell 40-1. Next, a modification (Modification 3) of Embodiment 2 will be described in which core apparatus 100 performs the Doppler shift compensation on DL signals transmitted to mobile station 10 respectively via a plurality of base station cells 40. Note that, the description of the configurations the same between Embodiment 2 and the modification is omitted.

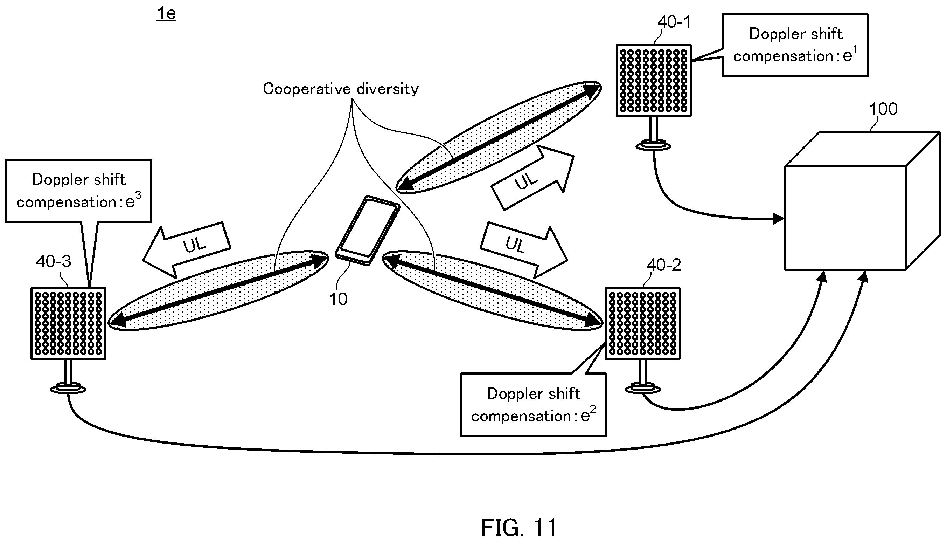

FIG. 11 is an explanatory view illustrating an example of radio communication system 1e according to Modification 3. In radio communication system 1e illustrated in FIG. 11, three base station cells 40-1, 40-2, and 40-3 are focused on for the sake of simplicity. Radio communication system 1e includes mobile station 10, base station cells 40-1, 40-2, and 40-3, and core apparatus 100.

Each of base station cells 40-1, 40-2, and 40-3 estimates a Doppler shift based on a radio signal received from mobile station 10. As illustrated in FIG. 10, base station cells 40-1, 40-2, and 40-3 transmit Doppler information indicating the estimated Doppler shift to core apparatus 100.

Core apparatus 100 having received the Doppler information from base station cells 40-1, 40-2, and 40-3 applies signal processing individually to DL signals that are to be transmitted to mobile station 10 via base station cells 40-1, 40-2, and 40-3. The signal processing is, for example, the Doppler shift compensation, or the Doppler shift compensation and frequency offset compensation. The Doppler shift compensation applies, to the DL signal, antiphase rotation that can cancel in-phase rotation dependent on the estimated Doppler shift, for example. The frequency offset compensation applies, to the DL signal, a frequency offset that can cancel the estimated frequency offset.

The magnitudes and signs of Doppler shifts $\Delta f_1$, $\Delta f_2$, and $\Delta f_3$ with respect to center frequency $f_c$ estimated by base station cells 40-1, 40-2, and 40-3 are different from one another depending on differences between the relative speeds of mobile station 10 relative to base station cells 40-1, 40-2, and 40-3. Thus, in one example, in order for mobile station 10 to receive the DL signals from a plurality of base station cells 40-1, 40-2, and 40-3 at the same center frequency $f_c$, core apparatus 100 applies antiphase rotations and frequency offsets to the DL signals.

For example, as illustrated in FIG. 11, core apparatus 100 applies respective different antiphase rotations $e^1$, $e^2$, and $e^3$ to the DL signals transmitted to mobile station 10 via base station cells 40-1, 40-2, and 40-3. Core apparatus 100 transmits, to base station cells 40-1, 40-2, and 40-3, the DL signals to which the signal processing has been applied.

According to Modification 3, even when moving at high speed, mobile station 10 receives the DL signals from a plurality of base station cells 40-1, 40-2, and 40-3 at the same center frequency $f_c$, and it is thus possible to obtain a diversity gain by cooperative diversity. Therefore, a decrease in the communication performance caused by the movement of mobile station 10 is reduced.

<Embodiment 3>

Next, Embodiment 3 in which Embodiment 1 and Embodiment 2 described above are combined will be described. In Embodiment 3, for example, core apparatus 100 selects base station cell 40 and applies compensation processing to a DL signal.

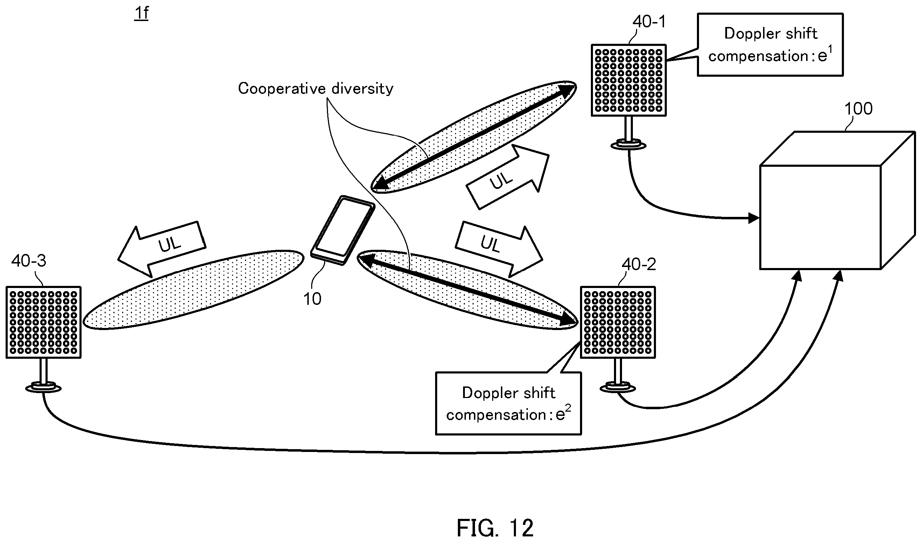

FIG. 12 is an explanatory view illustrating an example of radio communication system 1f according to Embodiment 3. In radio communication system 1f illustrated in FIG. 12, three base station cells 40-1, 40-2, and 40-3 are focused on for the sake of simplicity. Radio communication system 1f includes mobile station 10, base station cells 40-1, 40-2, and 40-3, and core apparatus 100.

Each of base station cells 40-1, 40-2, and 40-3 estimates a Doppler shift and measures a reception strength based on radio signals received from mobile station 10. As illustrated in FIG. 10, base station cells 40-1, 40-2, and 40-3 transmit Doppler information indicating the estimated Doppler shift and reception strength information indicating the measured reception strength to core apparatus 100.

Core apparatus 100 having received the Doppler information and the reception strength information from base station cells 40-1, 40-2, and 40-3 determines priorities for base station cells 40-1, 40-2, and 40-3 based on the Doppler information and the reception strength information.

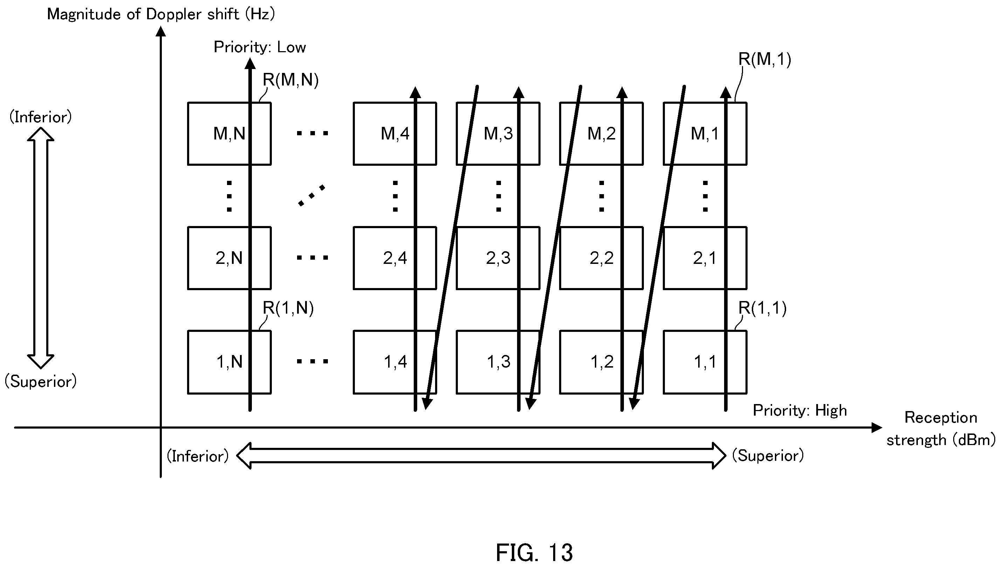

FIG. 13 illustrates an example of the determination of priorities. In one example, as illustrated in FIG. 13, a rectangular region in a two-dimensional space where the magnitude of the Doppler shift and the reception strength are used as coordinates is divided into a plurality of rectangular regions {R (i, j)}. Here, index i ($1 \leq i \leq M$) is an index determined according to the magnitude of the Doppler shift, and the smaller the value of index i, the smaller the magnitude of the Doppler shift. In addition, index j ($1 \leq j \leq N$) is an index determined according to the magnitude of the reception strength, and the smaller the value of index j, the larger the reception strength. The sizes of the horizontal widths and the vertical widths of the plurality of rectangular regions {R (i, j)} may be equal to or different from one another, or may also be uniform or not uniform. Further, the sizes may also be configured depending on the environment in which radio signals are received.

For example, the order of "$>_3$" is introduced for a plurality of rectangular regions {R (i, j)} as follows:

$$R \ (i1, j1) >_3 R \ (i2, j2) \ (j1 < j2)$$

$$R \ (i1, j) >_3 R \ (i2, j) \ (i1 < i2)$$

In comparison using the order of "$>_3$," rectangular region R (i, j) of a smaller magnitude of Doppler shift represents a higher priority, and rectangular region R (i, j) of a greater reception strength represents a higher priority. In addition, the reception strength has a greater effect on the order than the magnitude of Doppler shift has. Since, as is understood, the Doppler shift can be compensated for, the reception strength may be configured to have a greater effect on the order than the magnitude of Doppler shift.

Priorities are configured for the plurality of rectangular regions {R (i, j)} based on the comparison using the order of "$>_3$." When R (i1, j1) $>_3$ R (i2, j2), the priority configured for R (i1, j1) is higher than the priority configured for R (i2, j2). For example, as illustrated in FIG. 13, among the plurality of rectangular regions {R (i, j)}, the highest priority is configured for rectangular region R (1, 1) of the smallest magnitude of Doppler shift and the greatest reception strength. In addition, among the plurality of rectangular regions {R (i, j)}, the lowest priority is configured for rectangular region R (M, N) of the largest magnitude of Doppler shift and the smallest reception strength.

Core apparatus 100 determines, with respect to base station cell 40, the priority configured for rectangular region R (i, j) to which the magnitude of Doppler shift and the reception strength indicated in the Doppler information and the reception strength information received from base station cell 40 belongs. Core apparatus 100 selects a predetermined number of base station cells 40 in descending order of determined priority. In the example illustrated in FIG. 12, the predetermined number is two, and two base station cells 40-1 and 40-2 are selected.

In another example, letting the magnitude of Doppler shift and the magnitude of reception strength of base station cell 40-i as indicated in the Doppler information and the reception strength information be d(i) [Hz] and r(i) [dBm], respectively, priorities are determined for base station cell 40-i based on the following order of "$>_4$:"

Base station cell 40-i $>_4$ Base station cell 40-j (in the case of $C_3 \times r(i) - C_4 \times d(i) > C_3 \times r(j) - C_4 \times d(j)$) where both $C_3$ [dBm$^{-1}$] and $C_4$ [Hz$^{-1}$] are predetermined positive values. The priority configured for base station cell 40-i is higher than the priority configured for base station cell 40-j when base station cell 40-i $>_4$ base station cell 40-j. With decreasing value of $C_4/C_3$, the effect of the reception strength on the order increases more than the magnitude of Doppler shift. Core apparatus 100 selects the predetermined number of base station cells 40 (e.g., two base station cells 40-1 and 40-2) in descending order of priority determined based on the order of "$>_4$."

Then, core apparatus 100 applies signal processing to DL signals individually that are to be transmitted to mobile station 10 via selected base station cells 40-1 and 40-2. The signal processing is, for example, the Doppler shift compensation, or the Doppler shift compensation and frequency offset compensation. The Doppler shift compensation applies, to the DL signal, antiphase rotation that can cancel in-phase rotation dependent on the estimated Doppler shift, for example. The frequency offset compensation applies, to the DL signal, a frequency offset that can cancel the estimated frequency offset.

The magnitudes and signs of Doppler shifts $\Delta f_1$ and $\Delta f_2$ with respect to center frequency $f_c$ estimated by base station cells 40-1 and 40-2 are different from one another depending on differences between the relative speeds of mobile station 10 moving relative to base station cells 40-1 and 40-2. Thus, in one example, in order for mobile station 10 to receive the DL signals from a plurality of base station cells 40-1 and 40-2 at center frequency $f_c$, core apparatus 100 applies antiphase rotations and frequency offsets to the DL signals.

For example, as illustrated in FIG. 12, core apparatus 100 applies respective different antiphase rotations $e^1$ and $e^2$ to the DL signals transmitted to mobile station 10 via base station cells 40-1 and 40-2. Core apparatus 100 transmits, to base station cells 40-1 and 40-2, the DL signals to which the signal processing has been applied.

According to Embodiment 3, mobile station 10 receives the DL signals at center frequency $f_c$ from a plurality of base station cells 40-1 and 40-2 selected in decreasing order of determined priority. Thus, core apparatus 100 selects, as cells that perform cooperative diversity for mobile station 10, a plurality of base station cells 40 that are in preferable communication with mobile station 10. Consequently, mobile station 10 is capable of diversity connection with selected base station cells 40, to obtain a diversity gain by cooperative diversity. Consequently, a decrease in the communication performance caused by the movement of mobile station 10 is reduced.

(Other Embodiments)

In one example of the configuration illustrated in FIG. 4, physical layer processing section 12 of core apparatus 100 includes compensation section 15, and physical layer processing section 23 of base station cell 40 includes Doppler shift estimation section 25 and reception quality measurement section 26. Alternatively, physical layer processing section 23 may include compensation section 15, and physical layer processing section 12 may include at least one of Doppler shift estimation section 25 and reception quality measurement section 26 depending on functional allotment between physical layer processing section 12 and physical layer processing section 23. Further, according to a configuration change, control section 21 of base station cell 40 may implement at least a part of the function of control section 11 of core apparatus 100, or control section 11 may implement at least a part of the function of control section 21.

Core apparatus 100 may be referred to as a communication control apparatus, aggregate node, aggregate base station, signal processing apparatus, BaseBand processing Unit (BBU), Centralized-BBU (C-BBU), or master station. In addition, base station 40 may be referred to as a distributed node, extension station, Radio Unit (RU), remote installation base station, transmission point, or slave station.

(Hardware Configuration)

The block diagrams used to describe the embodiments illustrate blocks on the basis of functions. These functional blocks (constituent sections) are implemented by any combination of hardware and/or software. A means for implementing the functional blocks is not particularly limited. That is, the functional blocks may be implemented by one physically and/or logically coupled apparatus. Two or more physically and/or logically separated apparatuses may be directly and/or indirectly (for example, via wires and/or wirelessly) connected, and the plurality of apparatuses may implement the functional blocks.

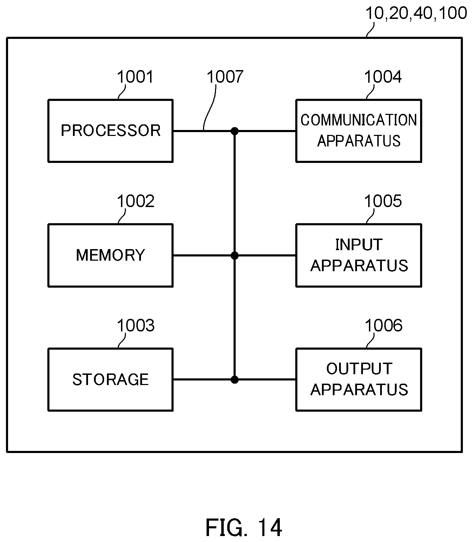

For example, the base station, terminal, and the like according to an embodiment of the present disclosure may function as a computer that executes processing of a radio communication method of the present disclosure. FIG. 14 illustrates an example of a hardware configuration of mobile station 10, base station 20, base station cell 40, and core apparatus 100 according to an embodiment of the present disclosure. Physically, mobile station 10, base station 20, base station cell 40, and core apparatus 100 as described above may be a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of mobile station 10, base station 20, base station cell 40, and core apparatus 100 may include one apparatus or a plurality of apparatuses illustrated in the drawings or may not include part of the apparatuses.

For example, although only one processor 1001 is illustrated, there may be a plurality of processors. The processing may be executed by one processor, or the processing may be executed by one or more processors at the same time, in succession, or in another manner. Note that processor 1001 may be implemented by one or more chips.

The functions in base station 20, base station cell 40, and core apparatus 100 are implemented by predetermined software (program) loaded into hardware, such as processor 1001, memory 1002, and the like, according to which processor 1001 performs the arithmetic and controls communication performed by communication apparatus 1004 or reading and/or writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control sections 11 and 21, physical layer processing sections 12 and 23, and the like as described above may be implemented by processor 1001.

Processor 1001 reads out a program (program code), a software module, or data from storage 1003 and/or communication apparatus 1004 to memory 1002 and executes various types of processing according to the read-out program or the like. As the program, a program for causing the computer to perform at least a part of the operation described in the embodiments is used. For example, at least part of the functional blocks constituting base station 20, base station cell 40, and core apparatus 100 may be implemented by a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented by one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including memory 1002 and/or storage 1003.

Communication apparatus 1004 is hardware (transmission and reception device) for communication between computers through a wired and/or wireless network and is also called as, for example, a network device, a network controller, a network card, or a communication module. For example, communication sections 13 and 22, radio processing section 24, and the like as described above may be implemented by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that input apparatus 1005 and output apparatus 1006 may be integrated (for example, a touch panel).

The apparatuses, such as processor 1001 and memory 1002, are connected by bus 1007 for communication of information. Bus 1007 may be composed of a single bus or by buses different among the apparatuses.

Furthermore, base station 20, base station cell 40, and core apparatus 100 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented by at least one of these pieces of hardware.

<Notification and Signaling of Information>

The notification of information is not limited to the aspects or embodiments described in the present disclosure, and the information may be notified by another method. For example, the notification of information may be carried out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

<Applied System>

The aspects and embodiments described in the present specification may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

<Processing Procedure and the like>

The orders of the processing procedures, the sequences, the flowcharts, and the like of the aspects and embodiments described in the present disclosure may be changed as long as there is no contradiction. For example, elements of various steps are presented in exemplary orders in the methods described in the present disclosure, and the methods are not limited to the presented specific orders.

<Operation of Base Station>

Specific operations which are described in the present disclosure as being performed by the base station may sometimes be performed by an upper node depending on the situation. Various operations performed for communication with a terminal in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

<Direction of Input and Output>

The information or the like (see the item of "Information and Signals") can be output from a higher layer (or a lower layer) to a lower layer (or a higher layer). The information, the signals, and the like may be input and output through a plurality of network nodes.

<Handling of Input and Output Information and the like>

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

<Determination Method>

The determination may be made based on a value expressed by one bit (0 or 1), based on a Boolean value (true or false), or based on comparison with a numerical value (for example, comparison with a predetermined value).

<Variations and the like of Aspects>

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the scope of the present disclosure defined by the description of the appended claims. Therefore, the description of the present disclosure is intended for exemplary description and does not limit the present disclosure in any sense.

<Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a radio technique (e.g., an infrared ray and a microwave), the at least one of the wired technique and the radio technique is included in the definition of the transmission medium.

<Information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

<"System" and "Network">

The terms "system" and "network" used in the present disclosure can be interchangeably used.

<Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

<Base Station>

The terms "Base Station (BS)," "radio base station," "fixed station," "NodeB," "eNodeB (eNB)," "gNodeB (gNB)," "access point," "transmission point," "reception point, "transmission/reception point," "cell," "sector," "cell group," "carrier," and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

<Mobile Station>

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

<Base Station/Mobile Station>

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user terminal. For example, the aspects and the embodiments of the present disclosure may find application in a configuration that results from replacing communication between the base station and the user terminal with communication between multiple user terminals (such communication may, e.g., be referred to as device-to-device (D2D), vehicle-to-everything (V2X), or the like). In this case, user equipment 20 may be configured to have the functions that the base station described above has. The wordings "uplink" and "downlink" may be replaced with a corresponding wording for inter-equipment communication (for example, "side"). For example, an uplink channel, a downlink channel, and the like may be replaced with a side channel.

Similarly, the user terminal in the present disclosure may be replaced with the base station. **In** this case, the base station is configured to have the functions that user equipment 20 described above has.

<Meaning and Interpretation of Terms>

As used herein, the term "determining" may encompass a wide variety of actions. For example, "determining" may be regarded as judging, calculating, computing, processing, deriving, investigating, looking up, searching (or, search or inquiry)(e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

<Reference Signal>

The reference signal can also be abbreviated as an RS and may also be called as a pilot depending on the applied standard.

<Meaning of "based on">

The description "based on" used in the present disclosure does not mean "based only on," unless otherwise specified. In other words, the description "based on" means both of "based only on" and "based at least on."

<Terms "first" and "second">

Any reference to elements by using the terms "first," "second," and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

<"Means">

The "means" in the configuration of each apparatus described above may be replaced with "section," "circuit," "device," or the like.

<Open-ended Format>

In a case where terms "include," "including," and their modifications are used in the present disclosure, these terms are intended to be inclusive like the term "comprising." Further, the term "or" used in the present disclosure is not intended to be an exclusive or.

<Time Units such as a TTI, Frequency Units such as an RB, and a Radio Frame Configuration>

The radio frame may be constituted by one frame or a plurality of frames in the time domain. The one frame or each of the plurality of frames may be called a subframe in the time domain.

The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user terminal) on a TTI-by-TTI basis to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP. The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

<Maximum Transmit Power>

The "maximum transmit power" described in the present disclosure may mean a maximum value of the transmit power, the nominal UE maximum transmit power, or the rated UE maximum transmit power.

<Article>

In a case where articles, such as "a," "an," and "the" in English, for example, are added in the present disclosure by translation, nouns following these articles may have the same meaning as used in the plural.

<"Different">

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

Industrial Applicability

One aspect of the present disclosure is useful for mobile communication systems.

Reference Signs List

    10 Mobile station
    11 Control section

12 Physical layer processing section
13 Communication section
15 Compensation section
20 Base station
21 Control section
22 Communication section
23 Physical layer processing section
24 Radio processing section
25 Doppler shift estimation section
26 Reception quality measurement section
30 Macro cell
40, 40-1, 40-2, 40-3, 40-4, 40-5 Base station cell
50, 50-1, 50-2, 50-3, 50-4 Small or semi-macro cell
B1, B2, B3 Beam
100 Core apparatus

## Claims

1. A communication control apparatus (100), comprising:

   a control section (11) configured to select at least one cell from among a plurality of cells (40) based on information on a Doppler shift estimated based on an uplink reference signal, which the at least one cell received from a terminal (10), in each of the plurality of cells (40); and
   a transmission section configured to transmit a downlink transmission signal to the at least one cell (40) selected, the downlink transmission signal being for controlling radio connection with the terminal (10).

2. The communication control apparatus according to claim 1, wherein
   the control section (11) configured to configure a priority for each of the plurality of cells (40) in accordance with a condition dependent on a radio environment of each of the plurality of cells (40), the priority being relevant to selection of the at least one cell (40).

3. The communication control apparatus according to claim 2, wherein
   the control section (11) configured to configure the priority lower for a cell where the Doppler shift estimated is larger.

4. The communication control apparatus according to claim 1, wherein
   the transmission section configured to apply compensation processing dependent on the Doppler shift to the downlink signal to be transmitted to the cell selected, the downlink signal being addressed to the terminal (10).

5. The communication control apparatus according to claim 1, wherein
   the control section (11) configured to select, from among the plurality of cells, two or more cells to perform diversity transmission to the terminal (10).

6. A communication control method, comprising:

   selecting, by a communication control apparatus (100), at least one cell from among a plurality of cells (40) based on information on a Doppler shift estimated based on an uplink reference signal, which the at least one cell received from a terminal (10), in each of the plurality of cells (40); and
   transmitting, by a communication control apparatus (100), a downlink transmission signal to the at least one cell selected, the downlink transmission signal being for controlling radio connection with the terminal (10).

## Patentansprüche

1. Kommunikationssteuerungsvorrichtung (100), umfassend:

   eine Steuerungssektion (11), die so konfiguriert ist, dass sie mindestens eine Zelle unter einer Vielzahl von Zellen (40) basierend auf Informationen über eine Doppler-Verschiebung auswählt, die basierend auf einem Aufwärtsverbindungsreferenzsignal abgeschätzt wird, das die mindestens eine Zelle von einem Endgerät (10) in jeder der Vielzahl von Zellen (40) empfangen hat; und
   eine Übertragungssektion, die so konfiguriert ist, dass sie ein Abwärtsverbindungsübertragungssignal an die mindestens eine ausgewählte Zelle (40) überträgt, wobei das Abwärtsverbindungsübertragungssignal zum Steuern von Funkverbindung mit dem Endgerät (10) dient.

2. Kommunikationssteuerungsvorrichtung nach Anspruch 1, wobei
   die Steuerungssektion (11) so konfiguriert ist, dass sie eine Priorität für jede der Vielzahl von Zellen (40) gemäß einer Bedingung konfiguriert, die von einer Funkumgebung von jeder der Vielzahl von Zellen (40) abhängt, wobei die Priorität für die Auswahl der mindestens einen Zelle (40) relevant ist.

3. Kommunikationssteuerungsvorrichtung nach Anspruch 2, wobei
   die Steuerungssektion (11) so konfiguriert ist, dass sie die Priorität für eine Zelle, in der die Doppler-Verschiebung größer abgeschätzt wird, niedriger konfiguriert.

**4.** Kommunikationssteuerungsvorrichtung nach Anspruch 1, wobei

die Übertragungssektion so konfiguriert ist, dass sie eine von der Doppler-Verschiebung abhängige Kompensationsverarbeitung auf das an die ausgewählte Zelle zu übertragende Abwärtsverbindungssignal anwendet, wobei das Abwärtsverbindungssignal an das Endgerät (10) adressiert ist.

**5.** Kommunikationssteuerungsvorrichtung nach Anspruch 1, wobei

die Steuerungssektion (11) so konfiguriert ist, dass sie unter der Vielzahl von Zellen zwei oder mehr Zellen auswählt, um eine Diversityübertragung an das Endgerät (10) durchzuführen.

**6.** Temperatursteuerungsverfahren, umfassend:

Auswählen, durch eine Kommunikationssteuerungsvorrichtung (100), mindestens einer Zelle unter einer Vielzahl von Zellen (40) basierend auf Informationen über eine Doppler-Verschiebung, die basierend auf einem Aufwärtsverbindungsreferenzsignal abgeschätzt wird, das die mindestens eine Zelle von einem Endgerät (10) in jeder der Vielzahl von Zellen (40) empfangen hat; und

Übertragen, durch eine Kommunikationssteuerungsvorrichtung (100), eines Abwärtsverbindungsübertragungssignals an die mindestens eine ausgewählte Zelle, wobei das Abwärtsverbindungsübertragungssignal zum Steuern von Funkverbindung mit dem Endgerät (10) dient.

**Revendications**

**1.** Appareil de commande de communication (100), comprenant :

une section de commande (11) configurée pour sélectionner au moins une cellule parmi une pluralité de cellules (40) sur la base d'informations sur un décalage Doppler estimé sur la base d'un signal de référence de liaison montante, que l'au moins une cellule a reçu en provenance d'un terminal (10), dans chacune de la pluralité de cellules (40) ; et

une section de transmission configurée pour transmettre un signal de transmission de liaison descendante à l'au moins une cellule (40) sélectionnée, le signal de transmission de liaison descendante étant destiné à commander une connexion radio avec le terminal (10).

**2.** Appareil de commande de communication selon la revendication 1, dans lequel

la section de commande (11) est configurée pour configurer une priorité pour chacune de la pluralité de cellules (40) conformément à une condition dépendant d'un environnement radio de chacune de la pluralité de cellules (40), la priorité étant pertinente pour la sélection de l'au moins une cellule (40).

**3.** Appareil de commande de communication selon la revendication 2, dans lequel

la section de commande (11) est configurée pour configurer la priorité comme inférieure pour une cellule où le décalage Doppler estimé est plus grand.

**4.** Appareil de commande de communication selon la revendication 1, dans lequel

la section de transmission est configurée pour appliquer un traitement de compensation dépendant du décalage Doppler au signal de liaison descendante devant être transmis à la cellule sélectionnée, le signal de liaison descendante étant adressé au terminal (10).

**5.** Appareil de commande de communication selon la revendication 1, dans lequel

la section de commande (11) est configurée pour sélectionner, parmi la pluralité de cellules, deux cellules ou plus pour effectuer une transmission de diversité au terminal (10).

**6.** Procédé de commande de communication, comprenant :

une sélection, par un appareil de commande de communication (100), d'au moins une cellule parmi une pluralité de cellules (40) sur la base d'informations sur un décalage Doppler estimé sur la base d'un signal de référence de liaison montante, que l'au moins une cellule a reçu en provenance d'un terminal (10), dans chacune de la pluralité de cellules (40) ; et

une transmission, par un appareil de commande de communication (100), d'un signal de transmission de liaison descendante à l'au moins une cellule sélectionnée, le signal de transmission de liaison descendante étant destiné à commander une connexion radio avec le terminal (10).

FIG. 1

FIG. 2A

FIG. 2B

FIG. 3

FIG. 4

START

Receive reference signal from
mobile station — S12

Estimate Doppler shift — S14

Measure reception strength — S16

Transmit Doppler information to
core apparatus — S18

Transmit reception strength information to
core apparatus — S20

END

FIG. 5A

START

Receive Doppler information from base station cell ~S26

Receive reception strength information from base station cell ~S28

Determine priority for base station cell ~S30

Select base station cell ~S32

Perform Doppler shift compensation on DL signal addressed to mobile station ~S34

Perform frequency offset compensation on DL signal addressed to mobile station ~S36

Transmit DL transmission instruction signal to base station cell ~S38

Transmit DL signal addressed to mobile station to base station cell ~S40

END

FIG. 5B

FIG. 5C

FIG. 6

FIG. 7

FIG. 8

FIG. 9

FIG. 10

FIG. 11

FIG. 12

FIG. 13

10,20,40,100

| 1001 | 1007 | 1004 |
|------|------|------|
| PROCESSOR | | COMMUNICATION APPARATUS |

| 1002 | | 1005 |
|------|------|------|
| MEMORY | | INPUT APPARATUS |

| 1003 | | 1006 |
|------|------|------|
| STORAGE | | OUTPUT APPARATUS |

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008042855 A

**Non-patent literature cited in the description**

- Support Vector Machine -Based Wireless Channel Classification for Adaptive AFC in LTE Downlink. **Y. KANG** ; **H. GO** ; **M. SHIN** ; **W. HUR**. 2017 IEEE 85th Vehicular Technology Conference. VTC Spring, 2017